# EUROPEAN PATENT APPLICATION

(11) **EP 4 711 271 A1**
(43) Date of publication of application: **18.03.2026**
(21) Application number: 24200803.5
(22) Date of filing: 17.09.2024
(51) Int. Cl.: B64C 27/24, B64C 27/14, B64C 27/32, B64D 27/30, B64C 27/68, B64C 27/72

(54) **NEXT GENERATION ROTORCRAFT ATTRIBUTES: VTOL/CTOL CAPABILITY, DIRECT DRIVE ROTOR, FRONT WINGS, LAMINAR AIRFLOW MODULAR FUSELAGE, NEW CONSTRUCTION BLADE HINGES**

(71) Applicant: UAB PB Group, 78137 Siauliai (LT)
(72) Inventor: Skulskis, Donatas, Siauliai (LT)
(74) Representative: Metida

(57) **Abstract**

This invention relates to a MRO cost effective, VTOL/CTOL capable advanced rotorcraft design that addresses key challenges in current helicopter technologies. It employs a Direct Drive electric motor for propulsion, eliminating the need for complex gearboxes and transmission systems, thereby reducing mechanical complexity and maintenance costs. The electric motor provides Direct Drive, high torque, and enhances reliability and manoeuvrability. The fuselage features a laminar, elongated, and sleek shape for low air resistance and highspeed horizontal flight. Its modular construction optimizes aerodynamic efficiency and enables easy maintenance through quick module replacement. The rotorcraft also incorporates front wings (canards) for improved lift and manoeuvrability, especially at low altitudes. These wings enhance handling and stability, allowing precise movements in confined environments. This combination of PMSM propulsion, a modular laminar fuselage, and front wings results in superior performance, reduced maintenance, and increased versatility, making the rotorcraft well-suited for modern combat scenarios, including urban and littoral operations.

## Description

### FIELD OF THE INVENTION

The invention pertains to the field of next-generation helicopters (rotorcrafts). Helicopters have long been a cornerstone of both civilian and military aviation, offering unparalleled versatility in a range of missions from medical evacuations to troop transport. However, recent advancements in helicopter technology have reached a technological plateau. Despite substantial investments in research and development, the performance enhancements achieved are marginal. This phenomenon is called as "technological plateau" which indicates that current production technologies, designs, and constructions have approached their limits and need to be modified by integrating the new solutions such as hybrid propulsion, Direct Drive main rotor systems, modular construction, and advanced aerodynamic features. This invention addresses challenges by providing helicopters with much lower operational costs, increased reliability, speed, range, and manoeuvrability.

### BACKGROUND OF THE INVENTION AND ANALYSIS OF PRIOR ART

During the last several decades we see that the demand for new generation of helicopters are strongly needed. The development of new-generation helicopters is essential to address the limitations of current construction capabilities.

The helicopter and rotorcraft sector faces several significant challenges and problems that hinder operational efficiency and performance. One of the primary issues is the complexity and maintenance of main mechanical components such as rotorhead, swash plate mechanics ,gearboxes, interconnecting shafts, and transmissions. These components are prone to wear and tear, leading to high maintenance costs and frequent downtimes, which affect the overall reliability of the aircraft.

Additionally, aerodynamic inefficiencies present another major challenge. Traditional rotorcraft designs often suffer from high drag, reducing fuel efficiency and limiting speed capabilities. This is particularly problematic in many scenarios where both speed and fuel efficiency are critical.

Noise and vibration levels in conventional helicopters are also significant issues. High noise levels can compromise stealth operations, while excessive vibrations can lead to structural fatigue and discomfort for passengers and crew.

In urban and congested environments, the manoeuvrability and versatility of current rotorcraft are often inadequate. The ability to perform precise movements and operate in confined spaces is essential, yet many existing designs fall short in this aspect.

Also the integration of advanced propulsion systems remains a challenge. While hybrid and electric propulsion systems offer promising benefits, their integration into rotorcraft designs has been slow due to technical and logistical barriers.

Addressing these challenges requires innovative approaches that simplify mechanical designs, improve aerodynamic efficiency, reduce noise and vibration, enhance manoeuvrability, and successfully integrate advanced propulsion systems.

It is known a Prior Art document EP2829471A1 (published on 2015-01-28) which describes a swashplateless coaxial rotary wing aircraft, which uses a dual, contra-rotating main rotor system. This system includes an Individual Blade Control System (IBCS) for adjusting the pitch of each rotor blade independently, thereby eliminating the need for a traditional swashplate mechanism. The control signals and power for the IBCS are transmitted through slip rings. While this document addresses some mechanical complexities by eliminating the swashplate, it still relies on gearboxes and a complex transmission system. Comparing with our invention, we provide a more efficient, reliable, and versatile rotorcraft solution, addressing the limitations of the Prior Art with advanced design features and innovative propulsion systems.

Also there is known a patent document US9321526 (published on 2014-03-06) which describes a compound helicopter design featuring a main rotor and fixed wings equipped with propulsion devices. The fixed wings comprise a lower main wing and an upper secondary wing connected within an interconnection region. Propulsion devices, such as pusher propellers, are mounted at this interconnection region, and the upper secondary wing houses drive shafts from the engine to the propulsion devices. While this Prior Art document introduces a compound helicopter with pusher propellers and fixed wings, it relies heavily on traditional mechanical components like gearboxes and drive shafts, which add complexity and weight.

Also we have US2017137120 (published on 2017-05-18) in which there is described a helicopter featuring a noise and vibration damping transmission mounting system. This system uses a crosspiece made of both metallic and visco-elastic materials to support the transmission unit and mitigate the transmission of vibrations and noise to the fuselage. The design aims to improve the comfort of the crew by reducing the noise and vibrations experienced within the cabin. While the prior art focuses on reducing noise and vibration through advanced damping mechanisms, it still relies on complex mechanical components and traditional gear-based transmission systems.

And, finally, there is known document US20190023393A1 (published on 2019-01-24) which describes a compound helicopter featuring an innovative transmission and propulsion system. This system includes a main rotor, additional propulsion devices mounted on fixed wings, and a unique braced-wing configuration designed to enhance structural efficiency and aerodynamic performance. The invention aims to improve high-speed operations while ensuring architectural integration, structural weight optimization, and compliance with safety requirements. While the prior art focuses on structural efficiency and high-speed capabilities through a braced-wing design and additional propulsion devices, it still relies on traditional mechanical transmission systems.

General Prior Art comparison with our invention:
The Prior Art documents primarily focus on improving noise and vibration reduction, structural efficiency, and high-speed capabilities through advanced damping materials, braced-wing designs, and innovative transmission systems. However, these inventions still rely on traditional mechanical components like gearboxes and complex transmission systems. They also do not propose proper solutions for fuselage constructions and the use of front wings to achieve a sustainable high-speed mode. Further please find more detailed description of this invention with appropriate claims.

### SUMMARY OF THE INVENTION

This invention relates to MRO (Maintenance, Repair, Operational) cost effective, VTOL (Vertical Take-Off and Landing) / CTOL (Conventional Take-Off and Landing) capable advanced rotorcraft design that addresses key operational challenges faced by current helicopter technologies.

First of all, in a helicopter / rotorcraft is used a Direct Drive electric motor, in such a way the invention eliminates the need for complex gearboxes and transmission systems, reducing mechanical complexity and maintenance costs. Electric motor provides Direct Drive, delivering high torque and enhancing the reliability, operational time.

The design of fuselage is laminar, strongly elongated and of sleek shape, ensuring low air resistance in the direction of horizontal flight at high speed. fuselage has modular construction, enabling much simpler and faster production and easier maintenance through the quick replacement of potentially damaged modules.

Additionally, the rotorcraft incorporates front wings (canards), used in horizontal flight mode, which enhance lift and manoeuvrability, particularly at low altitudes. These front wings improve handling and stability, enabling the rotorcraft to perform precise movements in confined or complex environments.

The combined use of electric Direct Drive propulsion, a modular laminar airflow fuselage, and front wings will result rotorcraft that will offer superior performance, reduced maintenance costs, and increased versatility.

### BRIEF DESCRIPTION OF THE DRAWINGS

- Fig. 1: The general view of the Helicopter (1) showing the main modules of this invention: Rotor system (2), Fuselage (3) and Front wings (4) (view from the above).
- Fig. 2.: The general view of the Helicopter (1) showing the main modules of this invention: Rotor system (2), Fuselage (3) and Front wings (4) (view from the side).
- Fig. 3.: The main components of the Rotor system (2).
- Fig. 4.: The view of Fuselage (3) in a decomposed state, showing its modules as separate parts.
- Fig. 5.: The general view of the Helicopter (1) showing Front wings (4) in different positions: "up", "central", and "down".
- Fig. 6.: The front view of the Helicopter (1) showing Front wings (4).
- Fig. 7.: Different positions of Duct (5) module showing a tilting functionality.
- Fig. 8.: a) More detailed Rotor system (2) construction comprising rotor head (9), blade holder (10), and voice coil actuator (11); b) Enlarged view of the Blade holder (10) with voice coil actuator (11).
- Fig. 9.: The Blade holder (10) construction comprising a ball-type CV Joint (12).
- Fig. 10.: The Blade holder (10) construction comprising a tripod CV Joint (17).
- Fig. 11.: General view of a Voice coil actuator (11) system.
- Fig. 12.: Voice coil actuator (11) construction with internal tripod CV Joint for helicopter blade pitching.

### DETAILED DESCRIPTION OF THE INVENTION

The primary aim of this invention is to significantly reduce purchase and MRO (maintenance, repair, and operational) costs for helicopters. The new rotor system is designed to achieve these cost reductions by being direct powered, almost maintenance-free, and eliminating the need for shafts and gearboxes. This simplified and efficient design contrasts with recent technology helicopters that utilize very complex main rotor systems, which are costly to maintain and repair. The Direct Drive rotor in this invention offers enhanced reliability and durability, further lowering operational costs and ensuring sustained performance with minimal maintenance requirements. By addressing these critical aspects, the invention not only enhances the operational efficiency of helicopters, but also ensures significant cost savings over their lifecycle.

The cost effective, MRO VTOL/CTOL capable rotorcraft integrates a Direct Drive electric motor for propulsion, significantly reducing mechanical complexity by eliminating gearboxes and transmission systems. Direct Drive electric motor in this application can be of "outrunner" type or of Permanent-Magnet Synchronous Motor (PMSM) type. This Direct Drive system enhances reliability, operational efficiency. Additionally, the rotorcraft features a laminar, elongated fuselage with a sleek shape to minimize air resistance and maximize speed during horizontal flight. The modular construction of the fuselage allows for easy maintenance and quick replacement of damaged components. Incorporating front wings (canards) further improves lift, stability, and handling, especially at low altitudes and in confined environments. This advanced design ensures superior performance and adaptability in diverse operational scenarios, making it ideal for modern combat and urban applications.

Recognizing that the time needed for take-off and landing constitutes approximately 5% of the total flight time, engineers focused on optimizing the main phase. After extensive experimentation, they concluded that employing a powerful electrical rotor for take-off and landing would significantly enhance efficiency. This solution allows for rapid and precise vertical movements, ensuring quick, smooth, and reliable operations. The powerful electrical rotor not only accelerates the take-off and landing process, but also contributes to overall flight safety and performance, making the rotorcraft highly effective in various demanding scenarios.

Taking into account that take-off and landing are short processes, the use of a powerful electrical rotor eliminates the need for high-volume batteries. This efficient approach ensures rapid vertical movements without the burden of heavy batteries, enhancing the rotorcraft's overall performance, agility, and operational efficiency.

The Direct Drive system, powered by electric motor, eliminates the need for driveshafts and interconnecting gearboxes between the main rotor and the tail rotor. This design ensures that the main rotor can fix its position at any angle, enhancing practicality during transportation. The absence of a gearbox simplifies the mechanical design, making the aircraft more efficient and easier to maintain.

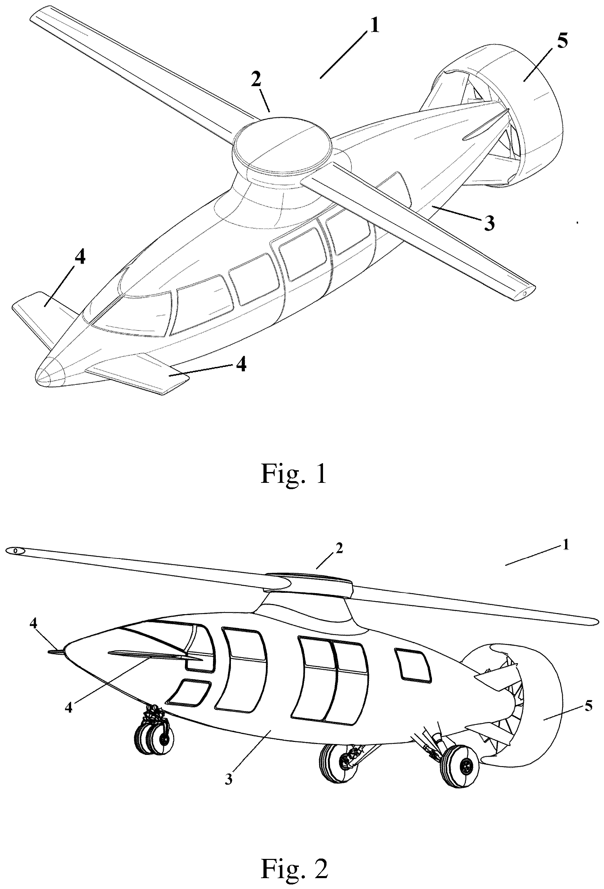

Fig. 1 and Fig. 2 show the general view from the above (Fig. 1) and from the side (Fig.2) of the Helicopter (1) showing the main modules of this invention: Rotor system (2), Fuselage (3) and Front wings (4).

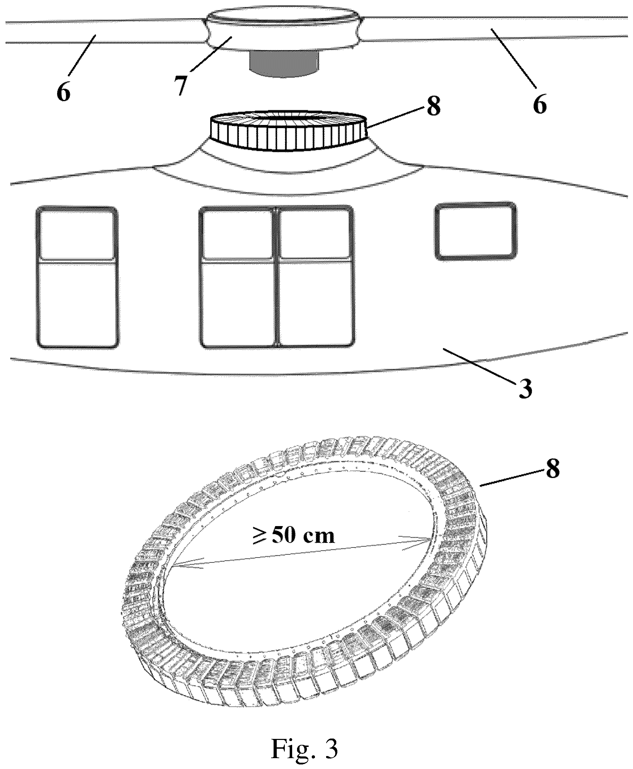

Fig. 3 shows in more details the Rotor system (2) which comprises of the following parts: blades (6), blades connecting module with magnets (7), and coils (8). All this Rotor system (2) is attached to the body of the Helicopter (1). The very important concept of this Rotor system (2) is to use approx. ≥50 cm diameter Direct Drive electric motor with no gears or shafts, equipped with two blades attached via electric actuators for pitch and cyclic controls in Vertical Take-off and Landing (VTOL) mode, and for pitch control in horizontal flight (HF) mode. Depending on helicopter size, the large diameter Direct Drive electric motor could be used. For example medium size 12-14 seats helicopter may use 180 cm diameter Direct Drive motor. Such motor, weighing approximately 200 kg, offers high torque, exceptional reliability, low costs, and superior redundancy, enhancing overall efficiency and performance. Rotor blades pitch/tilt process is executed by electric attenuators.

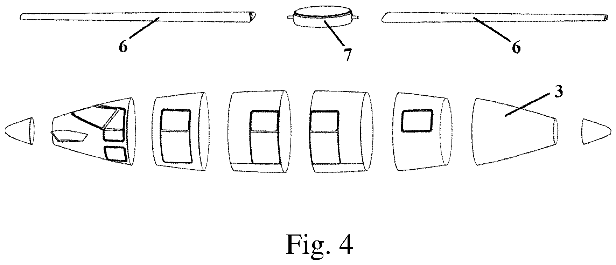

Fig. 4 shows the Fuselage (3) in a decomposed state with its modules as separate parts. The Fuselage (3) of this advanced rotorcraft is designed with a focus on aerodynamic efficiency and modular construction. Its laminar, elongated, and sleek shape minimizes air resistance, significantly enhancing performance during high-speed horizontal flight (HF) mode. This streamlined design ensures optimal fuel efficiency and increased operational range.

Moreover, the modular construction of the Fuselage (3) offers substantial practical advantages: each section of the fuselage can be easily replaced or repaired, reducing maintenance time and costs: this construction will allow to remove and replace with new any damaged module, instead of replacing or scraping the whole Fuselage (3); such modules are much more convenient, easier and faster to produce by filament winding and centrifugal casting technology. The modularity also allows for rapid customization and adaptation to different mission requirements, enhancing the rotorcraft's versatility.

Fuselage (3) modules are designed symmetric, so from total 8 required parts only 4 parts will be needed for the whole Fuselage (3) production (twice less different parts to be designed and produced).

Fuselage (3) modules can be produced by effective and rapid production technology: carbon fibre wrapping around round form technology - much reduced workload.

Each Fuselage (3) module will have preinstalled Data bus and Digital architecture with loop ethernet architecture with Power over Ethernet (POE) capability to power and command. All modules are connected into one system using the same data wires. Each component, with unique IP number will be able to connect to the system in any place throw the special connectors.

Additionally, talking about modular construction, traditional aircraft modules are typically cylindrical, relying heavily on internal frames and stringers to maintain structural integrity and prevent deformation under stress. However, in this invention, our solution is inspired by the natural strength and efficiency in the form of an eggshell, which supports itself without the need for internal supports. By designing an aircraft module with a reinforced skin, that possesses a special form and sufficient thickness, we eliminate the need for internal frames and stringers. This advanced modular construction not only reduces the weight and complexity of the aircraft, but also enhances its overall durability and resistance to external forces. The result is a more efficient and robust structure, capable of withstanding different external conditions of flight without the traditional internal reinforcements, thereby offering a significant improvement over existing modular designs. Also in our solution modules have skin convexity to the outer side which means that this design feature, where the outer surface of each module is convex or curved outward, is key to the structural integrity of the module contributing to its strength.

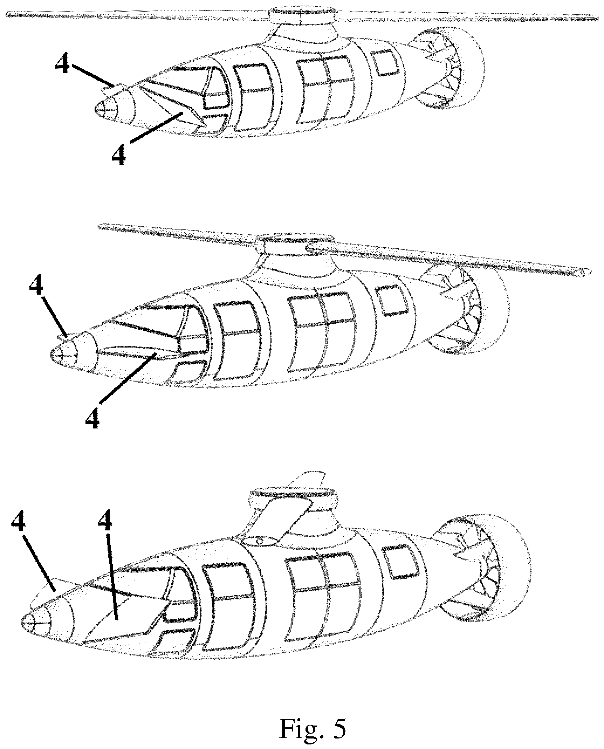

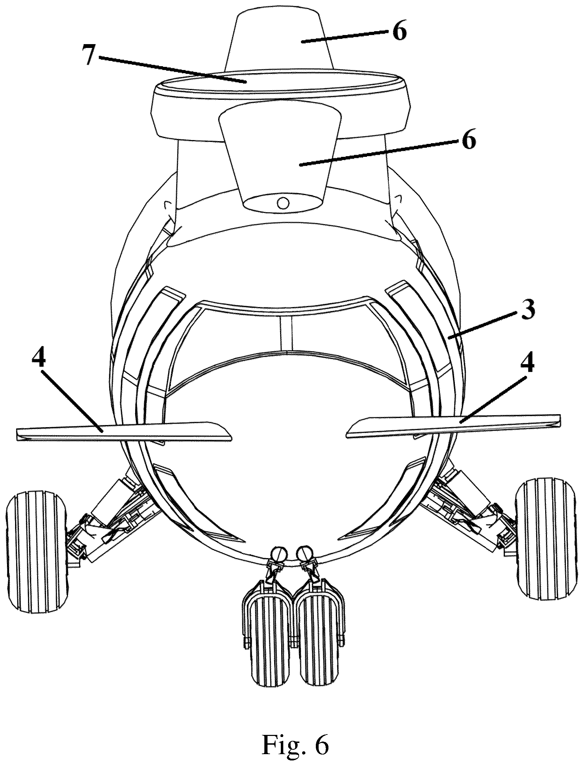

Fig. 5 and Fig. 6 show Front wings (4) which play very important role in this invention in combination with Rotor system (2), Fuselage (3), and Duct fan (5). The incorporation of Front wings (4) to Helicopter is very new concept because normally they are not needed. However, if we would like to achieve high speeds (>300-800 km/h), everything is changing. The front wings (4), or canards (4), incorporated into this advanced rotorcraft design play a pivotal role in enhancing its overall performance and manoeuvrability. Positioned at the front of the aircraft, these canards (4) provide additional positive or negative lift, which helps to balance the aircraft's weight distribution and improve aerodynamic efficiency. This is particularly beneficial during horizontal flight (HF), where the lift generated by the canards reduces the workload on the main rotor, allowing for smoother and more efficient flight dynamics. The canards (4) are also equipped with electric actuators that enable precise control of their pitch. This advanced control capability significantly enhances the rotorcraft's manoeuvrability, especially at low altitudes and in confined spaces, such as urban environments or rugged terrain. The canards (4) contribute to superior handling characteristics, allowing for agile and responsive movements that are crucial during complex flight operations. Additionally, the presence of canards (4) improves the rotorcraft's stability, making it easier to maintain steady flight in various conditions. This stability is vital for both combat and non-combat missions, ensuring that the aircraft remains controllable and safe even in challenging scenarios. The canards' (4) design and functionality not only enhance the rotorcraft's aerodynamic performance but also its operational versatility, making it an indispensable feature of this next-generation aircraft. Using canards (4), the Helicopter (1) itself will have even more manoeuvrability at low altitudes: while flying low and flying fast it will be capable to follow the ground profile to void sudden obstacles or anti-aircraft missiles attacks. Also the mentioned canards (4) may have possibility of rotation not only "up" and "down", but also "left" and "right" - to even more, together with Duct fan (5) functionality, control manoeuvrability / agility of the Helicopter (1) in perpendicular plane.

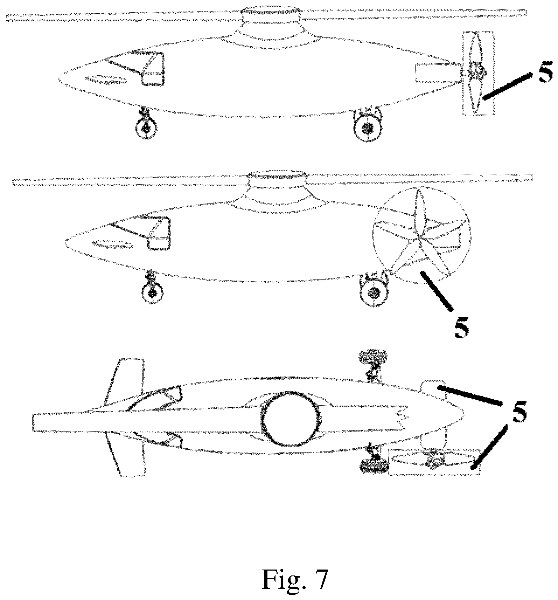

Talking about the Duct (5) module, this invention introduces an innovative tilting option for the rear pusher propeller and its entire engine assembly (Fig. 7). This design simplifies and enhances the reliability of the aircraft by tilting the entire rear propeller drive component, including the engine, rather than using complex mechanisms to adjust just the propeller. Given the compact nature of modern turbo engines, this approach effectively solves the engineering challenges associated with complex rear propeller shaft and gearbox power transition routing. By tilting the whole unit, the system reduces mechanical complexity, improves durability, and ensures efficient operation, particularly in providing both antitorque and propulsion functions.

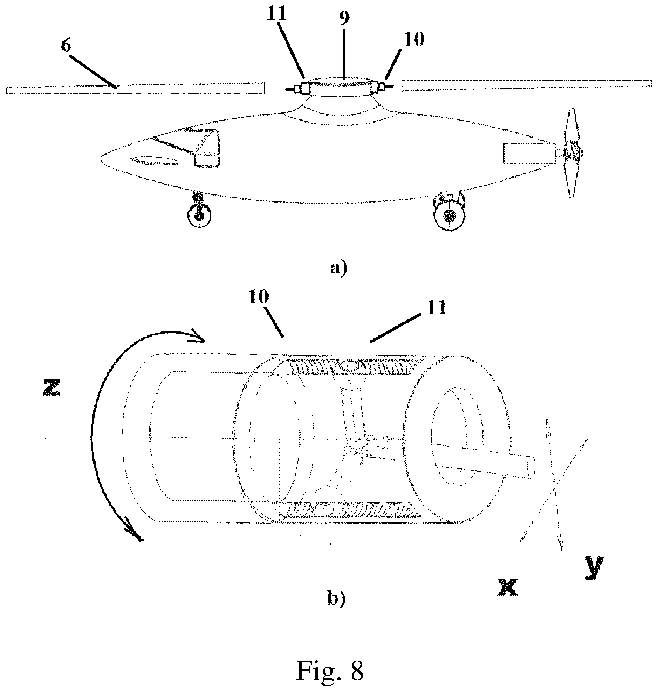

In the mentioned horizontal flight (HF) mode, a significant technical challenge arises when transitioning from blades (6) rotating mode to fixed blades (6) position mode. This transition is complex because it requires precise synchronization to halt the rotating blades (6) in a stable, aerodynamic position. Achieving this without inducing mechanical stress or imbalance is critical for maintaining flight stability and performance. In helicopter flight mode, the rotor blades (6) have freedom of movement in three axes: flap (up and down), lead/lag (forward and backward), and blade (6) pitch (clockwise and counterclockwise). However, when transitioning to airplane flight mode, it is crucial to fix the blades (6) to eliminate flap and lead/lag movements, ensuring stability. For an aircraft capable of vertical take-off and transitioning to fixed-wing flight mode, a specialized component is introduced, let's call it a blade holder (10) (it also can be called as actuator or fixator). This mentioned blade holder (10), which is attached to rotor head (9), secures the rotor blades (6) in a fixed wing-like position, allowing them to perform controlled pitching movements (Fig. 8.). The concept of the blade holder (10) for this aircraft takes inspiration from CV Joints (constant velocity Joints) used in the car industry. CV Joints are mechanical components that transmit power from the transmission to the wheels while accommodating changes in the angle between the drive shaft and the wheel. They allow for smooth power delivery despite the up-and-down motion of the suspension and the steering movements of the front wheels, which is crucial for consistent wheel speed and smooth driving, especially in front-wheel-drive and all-wheel-drive vehicles. Similarly, in the blade holder (10), a modified version of these Joints is used to maintain controlled movement and stability during transitions, making them ideal for securing helicopter rotor blades (6) (Fig 8.b.). Whilst in car industry CV Joint serve to transmit the power throw shaft, in this invention a modified CV Joint serves as a blade holder (10) for helicopter rotor blades (6). This adapted component allows the blades (6) to move smoothly along two axes (X and Y) and includes a locking mechanism that engages when the actuator raises, securing the joint bearings to prevent free movement. The third axis, the pitch movement, is controlled by a voice coil actuator mounted on the rotor head (9).

The voice coil actuator (11), also can be called as rotary voice coil, is a type of rotary motor that uses magnetic fields to produce a precise, rotary motion. It operates by moving a coil of wire within a magnetic field, allowing for highly accurate positioning and control. In this application, the voice coil actuator (11) adjusts the pitch of the rotor blades (6) by precisely manipulating the blade holder (10), ensuring optimal blade (6) positioning for various flight conditions (Fig. 8). In the application can be also used mechanical blade actuator however magnetic type voice coil actuator (11) has a lot of advantages: 1) high precision: the voice coil actuator (11) allows for extremely precise control of blade pitch, ensuring rapid and accurate adjustments in flight; 2) quick response time: with minimal inertia, the rotary voice coil actuator (11) reacts quickly to input signals, providing faster blade pitch changes compared to mechanical linkages; 3) simplicity: the use of a CV Joint reduces the complexity of traditional mechanical systems, which require multiple moving parts such as swashplates and rods, fewer parts mean lower maintenance requirements and increased reliability; 4) no mechanical linkage wear: traditional mechanical systems suffer from wear and tear in linkages and hinges, reducing performance over time, the CV Joint and voice coil combination eliminates many of these mechanical points of failure, leading to longer service life and reduced downtime; 5) compact and lightweight: the absence of complex mechanical linkages allows for a more compact design, which can be lighter and free up space in the rotor assembly; 6) smooth motion with angular flexibility: the CV joint allows for smooth, uninterrupted torque transmission, even with angular misalignments, unlike rigid mechanical linkages that can bind or wear, this flexibility ensures smooth blade motion in turbulent conditions; 7) reduced vibrations: the lack of mechanical parts prone to vibration or backlash improves overall flight stability and reduces wear on components.

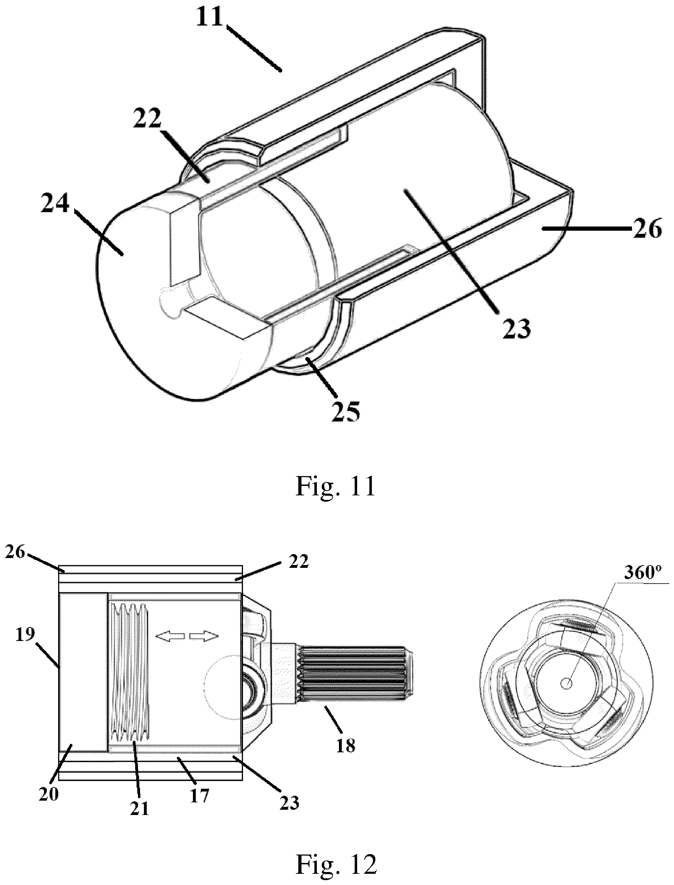

The more detailed voice coil actuator (11) construction can be seen on Fig. 11. This system offers a more efficient, reliable, and precise solution for controlling helicopter blade pitch, overcoming many of the challenges of traditional mechanical actuators. The voice coil actuator (11) comprises the following key components: a coil (22) - a wound copper wire coil designed to rotate within a magnetic field; a magnetic assembly (23) - a set of permanent magnets positioned to create a uniform radial magnetic field around the coil; a rotor (24) - the rotating component attached to the coil (22), mounted on bearings (25) to allow free rotation; a bearing system (25) - supports the rotor, allowing smooth and precise rotational movement; a housing (26) - encases the coil (22) and magnetic assembly (23), providing structural stability. When an electric current is applied to the coil (22), the interaction between the coil's (22) magnetic field and the permanent magnets (23) generates a torque that causes the rotor (24) to rotate around its central axis. The magnitude and direction of the rotation are controlled by varying the current in the coil (22). The key features of the voice coil actuator (11) are the following: 1) rotational motion - provides smooth angular movement, typically within a limited range of rotation (e.g., ±45° or ±90°); 2) high precision - accurate control over position and velocity based on the input current; 3) bidirectional operation - the direction of rotation can be easily reversed by changing the polarity of the current; 4) fast response: minimal inertia allows for quick changes in direction and speed. Voice coil actuators (11) are valued for their compactness, reliability, and ability to provide fast, precise rotational control in limited angular ranges, making them ideal for applications requiring high precision.

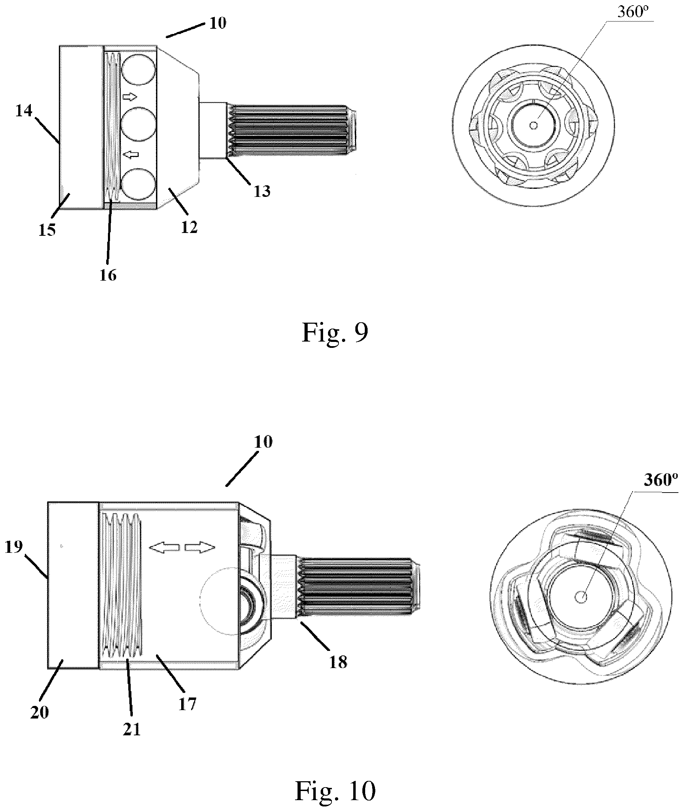

In this application two types of CV Joints were implemented: a Ball-type CV Joint (Rzeppa Joint) (see Fig. 9) and a Tripod Joint (see Fig. 10). Both joints provide flexibility in motion, but the Ball-type CV joint (12) is better for high-speed and constant velocity applications, while the tripod Joint (17) excels in high-torque, sliding motions.
A ball-type CV joint (12) features a spherical inner race with multiple grooves and steel balls positioned in a cage, allowing for smooth transmission of torque while accommodating angular displacement up to 45°. The design provides constant velocity by enabling rotational movement while compensating for changes in angle, making it ideal for high-speed, smooth rotation. Advantage of the Ball-type CV Joint (12) is high flexibility, constant velocity, smooth power delivery at variable angles.
A Tripod joint (17) consists of a three-legged yoke on the drive shaft that fits into a cup containing needle bearings. The tripod design allows sliding and angular movement, accommodating changes in length and angle while transmitting torque. It is typically used in lower-speed, high-torque applications. Advantage of the tripod type CV Joint is tolerating axial movement, compact, suited for high torque but lower speed.

A Ball-type CV joint (such as a Rzeppa joint) can provide universal angular motion, allowing for free lead-lag and flapping movements by enabling the helicopter rotor blades to move in any direction without complex mechanical linkages. The joint's spherical design allows the blades (6) to adjust dynamically to aerodynamic forces, accommodating both lead-lag and flapping without requiring multiple hinges or specialized bearings. The benefits of using the Ball-type CV Joint (12) in helicopters are the following: 1) simplification: eliminates multiple moving parts (e.g., pitch bearings, lead-lag hinges) by consolidating them into a single, robust joint; 2) durability: reduces mechanical wear and potential failure points due to fewer components; 3) maintenance: easier maintenance compared to traditional multi-hinge rotor heads, leading to lower operational costs; 4) smoother operation: allows smoother adjustments to blade movements, potentially improving flight stability. This simplification can reduce complexity, cost, and weight while enhancing mechanical reliability in helicopter construction. As it is shown in Fig. 9, the mentioned Ball-type Joint (12) from the right side is connected to the blade part (13), and from the left side to the rotor part (14). A screw actuator (15) is a part between part (14) and part on screw to block joint movement (16).

As we have indicated above the tripod-type CV Joint (17) comprises a three-pronged yoke (tripod) on the drive shaft, with rollers at the ends of each prong housed inside a cup with tracks. The rollers allow for angular movement, axial sliding, and rotational torque transmission. This joint supports lead-lag and flapping motions by allowing the blade to move longitudinally (lead-lag) and tilt (flapping) while smoothly transmitting power. The benefits of using the tripod-type CV Joint (17) in helicopters are the following: 1) simplification: tripod-type Joints combine lead-lag and flapping capabilities in one joint, reducing the need for complex hinge mechanisms; 2) durability: fewer parts and robust rollers reduce wear compared to traditional hinge systems; 3) low friction: rolling elements provide smoother and more reliable motion than sliding hinges; 4) axial flexibility: supports lengthwise adjustments, improving flight dynamics and load distribution. The tripod Joint (17) offers a compact, durable, and low-maintenance alternative to traditional multi-hinge rotor heads, ideal for helicopters requiring simplified blade movement mechanisms. As it is shown in Fig. 10, the mentioned tripod-type Joint (17) from the right side is connected to the blade part (18), and from the left side to the rotor part (19). A screw actuator (20) is a part between part (19) and part on screw to block joint (21).

As additional demonstration of the implementation of this invention - the construction of the voice coil actuator (11) with internal tripod CV Joint (17) - voice coil actuator (11) powered CV Joints for 3-rd blade movement - pitching (Fig. 12). Herewith it can be seen the rotary voice coil actuator (11) with an internal CV (constant velocity) Joint (17) is an advanced electromechanical system designed for fast, precise, and accurate rotational movements. It combines a voice coil actuator (11) for smooth angular motion with an internal CV joint (17) that allows flexible and efficient transmission of torque, even with angular misalignments. This setup is used to adjust the pitch of helicopter blades (6) by precisely controlling the angle of the blades (6) during flight. In this design the voice coil actuator (11) generates the rotational motion for blade pitching, it works by applying current to the coil (22), which interacts with a magnetic field to create torque, smoothly rotating the blades (6) to the desired pitch; and the CV Joint (17) transmits the rotational movement from the actuator (11) to the helicopter blade (6) shaft, the CV joint (17) ensures consistent torque transmission, even if the rotor experiences angular misalignments during operation, allowing smooth and reliable control.

We shall now examine why all these modules of this invention comprises the general concept: The Rotor system (2), powered by electric motor, is designed for Taking-off and Landing, it also can fly some time in horizontal direction using only Rotor system (2). However, when the Helicopter (2) already has required altitude, it can slow and stop / fix its blades (6) at required position, for example: in parallel to the length of the Fuselage (3), indicated in Fig. 2 or in perpendicular (like wings of the plane) to the length of the Fuselage (3), indicated in Fig. 1. And in these both configurations the Helicopter (1) can be pushed forward by Duct fan (5). In such situation (in HF mode) the Fuselage (3) form and Front wings (4) start to play main role for the high speed flight. Thus, theoretically, Helicopter (1), changing VTOL mode to HF mode, becomes similar to the plane.

To implement the idea of HF mode, the Helicopter (1) is equipped with hybrid propulsion. The Rotor system (2) is powered only by electric motor, and the rear propulsion Duct fan (5) is powered by electric motor (for short use) and by efficient turboprop/turboshaft engine like GE T901 (for long distances) and high speed flights. The rear propulsion Duct fan (5) is approximately 230 cm in diameter, also have airflow vectoring system for antitorque and manoeuvrability support tasks. The synergic of 2 propulsions electric and gas will grant the concept with extra ordinary capabilities. Without interconnections to each other co-working of 2 propulsions will make aircraft much safer in all flight modes in case of fail. In emergency cases, in total system shutdown and 3 batteries loss, rotor/motor head will be capable to work as generator, to generate the electricity required for landing.

Also, one of the implementation is: when rear turbo prop Duct fan (5) pushes aircraft forward, the blades (6), being in a free rotation position, can start to generate the electricity to charge the battery pack converting rotational blades' (6) energy to electricity powering Rotor system (2) battery pack and Rotor system (2) itself making a possibility for Landing even if all battery pack energy was used for some reasons before.

In order to illustrate and describe the present invention, a description of preferred embodiments is given above. This is not an exhaustive or restrictive description that seeks to define the exact form or implementation option. The above description should be seen as an illustration rather than a limitation. An embodiment is selected and described for the purpose of providing by the inventor with the best explanation of the principles of the invention and the best practical application thereof for different embodiments, with different modifications suitable for the particular use or implementation. It is intended that the scope of the invention shall be defined by the appended claims and their equivalents, in which all such terms shall have the widest possible meaning, unless otherwise specified. Embodiments described by inventor may include modifications that do not depart from the scope of the present invention as defined below.

## Claims

1. A Helicopter (1), comprising:
a Vertical take-off and Landing system (VTOL);
a Fuselage;
blades; and
a Duct fan (5);
**characterized in that:**
the VTOL comprises a Rotor system (2) based on a Direct Drive electric motor, where the Rotor system (2) having: blades (6), blade connecting module with magnets (7), and coils (8).

2. The Helicopter (1) according to claim 1, **characterized in that** the mentioned Direct Drive electric motor is of "outrunner" type, or is Permanent-Magnet Synchronous Motor (PMSM).

3. The Helicopter (1) according to claims 1-2, **characterized in that** the Rotor system (2) has two blades (6), which can be stopped / fixed in different positions during the flight using these blades (6) as wings.

4. The Helicopter (1) according to claim 3, **characterized in that** the Rotor system (2) has:
a blade holder (10) adapted to secure rotor blades (6) to a rotor head (9), said blade holder (10) configured to allow controlled movement of the rotor blades (6) along two axes (X and Y), providing smooth motion during helicopter flight mode and maintaining stability during transitions to fixed-wing flight mode;
a modified constant velocity (CV) joint integrated within the blade holder (10), enabling said controlled movement along the X and Y axes while providing a locking mechanism that engages to secure the rotor blades (6) in a fixed position to eliminate flap and lead/lag movements when transitioning to the horizontal flight mode;
a voice coil actuator (11) mounted on the rotor head (9), coupled to the blade holder (10), for adjusting the pitch of the rotor blades (6) by providing precise rotary motion control, allowing for controlled pitch movements and maintaining optimal aerodynamic positioning of the rotor blades (6) during horizontal flight mode;
wherein the blade holder (10) assembly maintains flight stability and performance by allowing for controlled synchronization and secure positioning of the rotor blades (6) during transitions between rotating and fixed positions, enhancing the aircraft's ability to operate efficiently in both helicopter and airplane flight modes.

5. The Helicopter (1) according to claim 4, **characterized in that,** the mentioned CV Joints are used of a Ball-type Joint (12) or a tripod-type Joint (17).

6. The Helicopter (1) according to claims 1-5, **characterized in that** the coils (8) of outrunner electric motor has diameter equal or more than 50 cm,

7. The Helicopter (1) according to proceeding claims, **characterized in that** the Fuselage (3) has laminar - elongated and sleek shape - designed with a focus on aerodynamic efficiency, especially at high speeds > 300-800 km/h.

8. The Helicopter (1) according to proceeding claims, **characterized in that** the Fuselage (3) has modular construction, wherein each module designed to be easily replaced or repaired, reducing maintenance time and costs: such modular construction allows to remove and replace with new any damaged module, instead of replacing or scraping the whole Fuselage (3).

9. The Helicopter (1) according to proceeding claims, **characterized in that** the Fuselage (3) has modular construction, wherein some of the mentioned modules can be symmetric reducing the whole number of different parts, for example: if the Fuselage (3) comprises of total 8 required parts, only 4 type of parts will be needed for the whole Fuselage (3) production.

10. The Helicopter (1) according to proceeding claims, **characterized in that** the Fuselage (3) has modular construction,
wherein:
the mentioned modular construction is in the form of an eggshell which supports itself without the need for internal supports like internal frames and stringers; and
the mentioned modular construction has skin convexity to the outer side.

11. The Helicopter (1) according to proceeding claims, **characterized in that** it has Front wings / canards (4) positioned at the front of the aircraft, where these canards (4) provide additional positive or negative lift, which helps to balance the aircraft's weight distribution and improve aerodynamic efficiency.

12. The Helicopter (1) according to proceeding claims, **characterized in that** the mentioned Front wings (4) has rotational possibilities not only in "up" and "down" directions, but also in "left" and "right" - to even more, together with Duct fan (5) functionality, control manoeuvrability / agility of the Helicopter (1) in perpendicular plane.

13. The Helicopter (1) according to proceeding claims, **characterized in that** the mentioned Duct (5) module has a tilting option for the rear pusher propeller and its entire engine assembly, this design simplifies and enhances the reliability of the aircraft by tilting the entire rear propeller drive component, including the engine, given the compact nature of modern turbo engines, this approach effectively solves the engineering challenges associated with complex rear propeller shaft and gearbox power transition routing, by tilting the whole unit, the system reduces mechanical complexity, improves durability, and ensures efficient operation, particularly in providing both antitorque and propulsion functions.

14. The method of use of the Helicopter (1), according to proceeding claims, at high speeds (>300-800 km/h) in Horizontal flight (HF) / plane mode, comprising the following steps:
- using a Rotor system (2), based on Direct Drive electric motor, to lift the Helicopter (1) to the needed altitude;
- using a Duct fan (5) to accelerate it to the needed speed (>200-300 km/h);
- fix blades (6) at parallel or perpendicular position;
- using in combination laminar - elongated and sleek shape design of the Fuselage (3), Front wings (4) and Duct fan (5) to accelerate achieving >300-800 km/h speed;
- using Front wings (4) to manage the altitude of the Helicopter (1) in a HF / plane mode.

15. The method of use of the Helicopter (1), according to claim 12, **characterized in that** at high (>300-800 km/h) speeds, when using Duct fan (5) and free rotating blades (6), to convert rotational blades' (6) energy to electricity powering Rotor system (2) battery pack and Rotor system (2) itself making a possibility for Landing even if all battery pack energy was used for some reasons before.
